# EUROPEAN PATENT SPECIFICATION

(11) **EP 1 371 243 B1**
(45) Date of publication and mention of the grant of the patent: **12.08.2009**
(21) Application number: 02704018.7
(22) Date of filing: 11.03.2002
(51) Int. Cl.: H04W 12/06

(54) **A SYSTEM AND A METHOD TO IDENTIFY MOBILE USERS**
SYSTEM UND VERFAHREN ZUR IDENTIFIZIERUNG MOBILER BENUTZER
SYSTEME ET METHODE PERMETTANT D'IDENTIFIER DES UTILISATEURS DE TELEPHONES MOBILES

(30) Priority: 12.03.2001 SE 0100832
(43) Date of publication of application: 17.12.2003
(73) Proprietor: TELIASONERA AB, 106 63 Stockholm (SE)
(72) Inventor: ANDERSSON, Greger, S-136 40 Haninge (SE); ENGBERG, Thomas, S-864 32 Matfors (SE); LILJESTAM, Lars, S-857 33 Sundsvall (SE)
(74) Representative: Hopfgarten, Nils
(86) International application number: PCT/SE2002/000445
(87) International publication number: WO 2002/073991

(56) References cited:
- WO-A1-99/26124
- WO-A2-00/60823
- GB-A- 2 348 570
- GB-A- 2 348 778
- US-A- 5 670 950

## Description

### FIELD OF THE INVENTION

The present invention relates, according to a first aspect, to a mobile communication system for identifying, when establishing a connection towards a public data communication network, a plurality of mobile users.

According to a second aspect, the present invention relates to a method for identifying, in a mobile communication system, mobile users when establishing a connection towards a public data network.

According to a third aspect, the present invention relates to a computer program product for, in a mobile communication system, identifying mobile users when establishing a connection towards a public data communication network.

### PRIOR ART

There today exist demands on Internet-operators that they shall be able to trace and exclude users at suspicions as to misuse, for instance spoofing attacks against servers and routers on the Internet.

The standard procedure at misuse, for instance by spoofing-attacks against servers and routers on Internet is that the packets which are transmitted towards the server are analyzed, and by that the transmitting persons IPaddress can be found out. Then the problem remains to know who is the user of an IP-address on Internet on a specific occasion.

With the technology of today, one has to let each user of Internet perform a log-in procedure where the user specifies user name and password by means of a node with Radius-like functionality. The Radius-server then registers password, user name and the time of the day in a network database together with one from a DHCP-server allocated global IP-address. At the logging off, when the IP-address is returned to the IP-pool, the new time of the day is again registered together with the user's data.

Document GB-2,348,778 describes authentication at mobile Internet access, by means of GPRS. When a terminal wants to register itself in the access network, it transmits a unique IMSI (International Mobile Subscriber Identity) or a part of that to the network. This then is used by the network to decide the IP-address of the homeIPS (Internet Service Provider) of the terminal by comparison with an IPS-IP address database. The access network then transmits an authentication request to the ISP via Internet by use of the identified IP-address.

Document WO 00/60823 describes mobile Internet access in a GSM-GPRS network. When a mobile terminal requests Internet access, the request is directed via a BTS (Base Transceiver System) and a radio network control unit BSC (Base Station Controler) to a GGSN-node. The GGSN-node in its turn directs its request to an Internet access server (IAS). The IAS-server allocates the calling mobile terminal an IP-address. The allocated IP-address is returned to the mobile terminal via the packet switching network and the radio network, at which the mobile terminal can start an Internet session. This document, on the other hand, does not deal with identification at misuse.

Document US-5,670,950 describes a private communications network system which allows a mobile station to be used in a different private communications network than that in which it is registered, by a method of authenticating the mobile station outside of its home private communications network. When a mobile station 17 requests location registration in a private communications network 2 in which the mobile station 17 is not registered, a control unit 22 of a PBX 21 in the private communications network 2 requests a network common data management unit 3 to send group data which is used to identify a private communications network 1 in which the mobile station 17 is registered. Control unit 22 then requests a PBX 11 in a private communications network 1 to send subscriber data 33 of the mobile station 17. The mobile station 17 is authenticated in the private communications network 2 by the subscriber data 33 sent from its home private communications network 1, where after the mobile station 17 can make calls from or can receive incoming calls in the private communications network 2. Billing data for calls the mobile station 17 has made in the private communications network 2 is transferred and stored in the home network common data management unit 3 on a group basis.

Document WO 99/26124 describes authentication of mobile units at Internet access, by generation of a password in the SIM-card.

None of the above presented systems and/or methods solves the problem of identification of mobile Internet users, where GPRS is carrier, in order to trace users at misuse on Internet.

### SUMMARY OF THE INVENTION

It is an aim of the present invention to solve the above mentioned problems.

This is achieved according to a first aspect of the present invention, with a mobile communication system for identifying, when establishing a connection towards a public data communication network, mobile users according to claim 1. The system according to the present invention solves the problem of identifying mobile Internet-users in order to make it possible to trace users at misuse on Internet. An advantage with this system is that no extra logging on is needed with user name and password, but it will none the less be possible to handle identification of users. Another advantage is that this solution does not need any Radius-server, which means one node fewer.

An advantage in this connection is achieved if the mobile communication system is a GPRS-network and the public data communication network is Internet, and in that and the GPRS-network and Internet are connected to an interface where a mobile Internet-user is allocated an IP-address.

In this connection an advantage is achieved if the mobile communication system is a GPRS-network and the public data communication network is an Intranet, and in that the GPRS-network and Intranet are connected to an interface where a mobile Intranet-user is allocated a private IP-address, and a router which converts private addresses to public addresses and vice versa.

An advantage in this connection is achieved if each modified call detail data record is a modified CDR which includes time information, IMSI, MSISDN and allocated address.

In this connection an advantage is achieved if the second memory device is an HLR.

An advantage in this connection is achieved if said first node is an SGSN and in that said second node is a GGSN.

In this connection an advantage is achieved if each CDR is created in SGSN and/or GGSN at initiation by a mobile station.

An advantage in this connection is achieved if said third node is a BH-node.

This also achieved, according to a second aspect of the present invention, with a method for identifying, in a mobile communication system, mobile users, when establishing a connection towards a public data communication network according to claim 8.

The method according to the present invention solves the problem of identification of mobile Internetusers in order to trace users at misuse on Internet. An advantage with this method is that no extra logging on with user name and password is needed, but it is none the less possible to handle identification of users. Another advantage is that this solution does not require any Radius-server, which means one node fewer.

An advantage in this connection is achieved if the mobile communication system is a GPRS-network and the public data communication network is Internet, and in that the GPRS-network and Internet are connected to an interface, which method in addition includes the step:
- that the interface allocates a mobile Internet user an IP-address.

In this connection an advantage is achieved if the mobile communication system is a GPRS-network and the public data communication network is an Intranet, and in that the GPRS-network and Intranet are connected to an interface and a router, which method in addition includes the steps:
- that the interface allocates a mobile Intranet-user a private IP-address; and
- that the router converts the private address to a public address, which router in addition converts public addresses to private addresses.

An advantage in this connection is achieved if each modified call detail data record is a modified CDR which includes time information, IMSI, MSISDN and allocated address.

In this connection an advantage consequently is achieved if the second memory device is an HLR.

An advantage in this connection is achieved if said first node is an SGSN and in that said second node is a GGSN.

In this connection an advantage is achieved if the method in addition includes the step:
- that, at initiation by a mobile station, each CDR is created in an SGSN and/or in a GGSN.

An advantage in this connection is achieved if said third node is a BH-node.

This is also achieved, according to a third aspect of the present invention, with a computer program product according to claim 15.

The computer program product according to the present invention solves the problem of identifying mobile Internet-users in order to trace users at misuse on the Internet. One advantage with this software product is that no extra logging on with user name and password is needed, but it will none the less be possible to handle identification of users.

It should be observed that when the term "include/including" is used in this description it skall be regarded to indicate the existence of specified qualities, steps or components, but does not exclude the existence of one or more qualities, parts, steps, components or groups of them.

Embodiments of the invention now will be described with reference to the enclosed drawings, where:

### BRIEF DESCRIPTION OF THE DRAWINGS

Figure 1 shows a survey of the logic GPRS-structure;
Figure 2 shows a block diagram of a system according to the present invention:
   Figure 3 illustrates in schematic form mobile Internet access via a GPRS-network;
   Figure 4 shows schematically example of data fields in a CDR;
   Figure 5 illustrates in schematic form a Billing Handler in a GPRS-network;
   Figure 6 shows a flow chart of a method for identifying, in a mobile communication network, mobile users when establishing a connection towards a public data communication network according to the present invention; and
   Figure 7 shows a schematic illustration of some computer program products according to the present invention.

### DETAILED DESCRIPTION OF EMBODIMENTS

A list of abbreviations which are used in this description is shown below to facilitate the understanding of the present invention.
- AN: Access Network
- AUC: Authentication Center
- BSS: Base Sub System
- CN: Core Network
- DHCP: Dynamic Host Control Protocol
- ETSI: European Telecommunication Standardization Institute
- GGSN: Gateway GPRS Support Node
- GPRS: General Packet Radio Service
- GTP: GPRS Tunneling Protocol
- GSM: Global System for Mobile communication
- HA: Home Agent
- HLR: Home Location Register
- SP: Service Provider
- IP: Internet Protocol
- MS: Mobile Station
- MSC: Mobile Services Switching Center
- MT: Mobile Termination
- PLMN: Public Land Mobile Network
- PSTN: Public Switched Telephone Network
- SGSN: Service GPRS Support Node
- SIM: Subscriber Identity Module
- SP: Service Provider
- TCP: Transport Control Protocol
- UDP: User Datagram Protocol
- UE: User Equipment
- VLR: Visitor Location Register

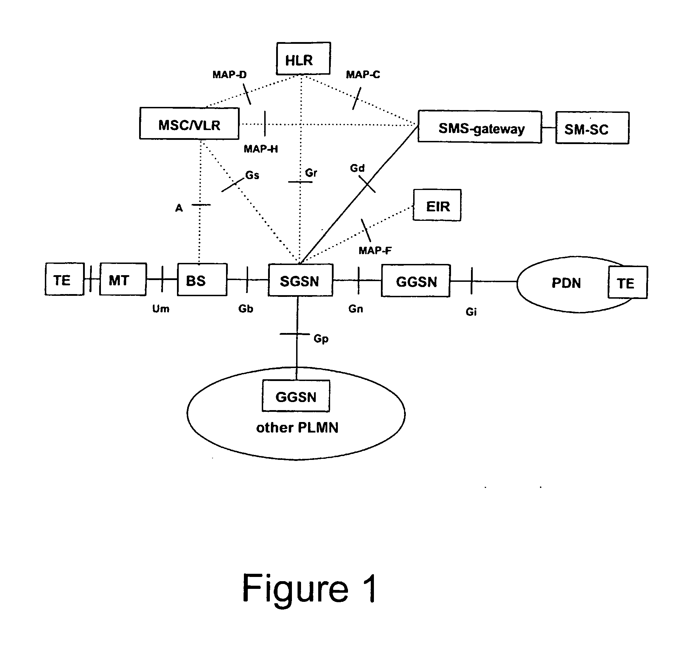

GPRS (General Packet Radio Service), see ETSI GSM 03.60 V5.2.0 "GPRS Service Description; stage 2", December 1997, is a packet switching service which, to a great extent, is based on a combination of GSM-infrastructure, IP-technology, and a set of new functions. Figure 1 shows a survey of the logic GPRS-architecture. The most important advantage with GPRS is that the limited radio resource is used only when there are data to be transmitted. There are two kinds. of support nodes in the backbone network; the main functions of SGSNs (Service GPRS Support Node) are to:
execute authentication and other procedures to make possible for new terminals to connect themselves to its service field/area;
transmit/receive data packets to/from the GPRS-mobile;
   - maintain a registration of the position of the mobile within its service field/area;
   - route data packets from one GPRS-operator to another; and
   - pr.oduce data registrations for the debiting and billing system.
SGSN communicates with HLR, EIR, the SMS-center etc via a GPRS-version of MAP.
Main functions in GGSN are to:
   route data packets from one GPRS-operator to another;
   route mobile terminated data packets to a suitable SGSN where the mobile is at present;
   serve as a gateway between a GPRS-network and external data communication networks (IP, X.25 etc);
   handle encapsulation and withdrawal of encapsulation of protocol packets with user data at communication with external data communication networks; and produce data registrations for debiting to the debiting and billing system.

The GPRS tunneling protocol, GTP, see ETSI Draft TS GSM 09.60 V5.0.0, "GPRS GTP across the Gn and Gp Interface", Jan. 1998, which is specific to GPRS, tunnels user data packets between SGSN and GGSN. This makes it possible for the network to support transmission of a plurality of packet data protocols, even if a protocol is not supported by all SGSNs. GTP also transmits signal data for mobile handling between the nodes. GTP is located above/on top of the transport-IP and UDP-layers in the protocol stack. By using a not standardized protocol for transmission of user data, it probably will be more difficult to users to do anything that causes damage to the system. On the other hand it will make it impossible to use standard IP tunneling mechanisms without specific solutions for GTP. One example is future resource reservation protocols which probably will operate in combination with standard "IP-in-IP"-tunneling.

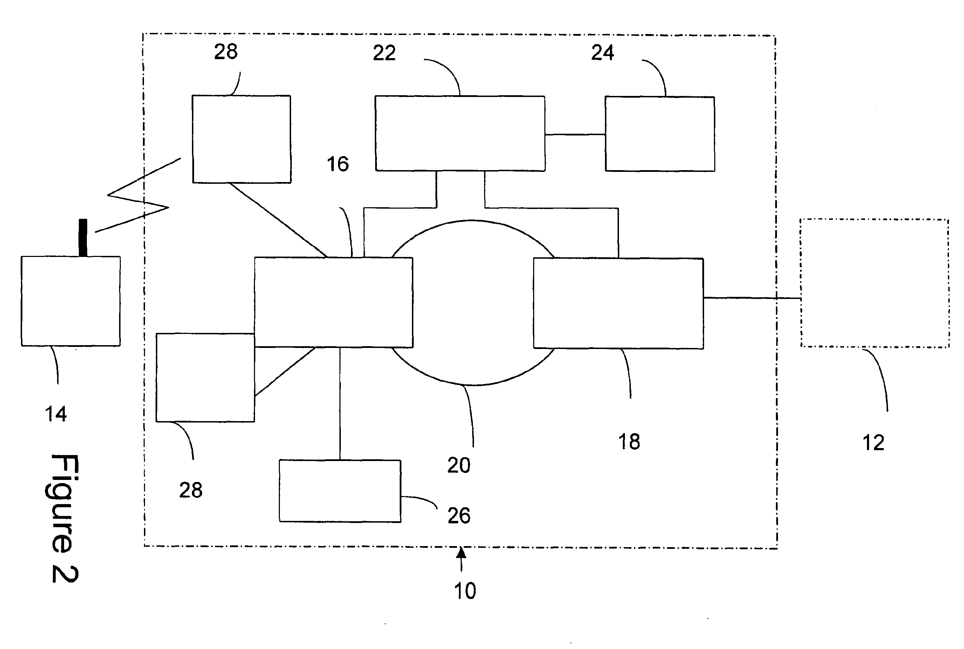

In Figure 2 a block diagram is shown of a Mobile communication system 10, for identifying, when establishing a connection towards a public data communication network 12, mobile users 14 according to the present invention. The mobile communication system 10 includes at least one first node 16 for handling of packet switching and charging data, and at least one second node 18 for establishing of connection to public data communication networks and transmission/mediatron of addresses. In Figure 2, for the sake of simplicity, only a first node 16 respective a second node 18, are shown. Said first node 16 and second node 18 are connected by means of a public data communication network 20 which is utilized to transmit data packets between the first node 16 and the second node 18. The mobile communication network 10 in addition includes a third node 22 connected to said first node/nodes 16 and to said second node/nodes 18 for filtering and duplication of modified call detail data records, at which each modified call detail data record includes a connection between an address and a subscriber. The third node 22 distributes the modified call detail data records to one to the third node 22 connected first memory device 24. The mobile communication system 10 in addition includes a second memory device 26 connected to said first node/nodes 16, which second memory device 26 stores subscriber information. In the in Figure 2 shown mobile communication system 10 also two base station subsystems 28 are included which hold equipment to handle the radio transmission to a mobile user, here shown in the form of a mobile telephone 14. A mobile user 14 is identified by means of the first memory device 24 and the second memory device 26.

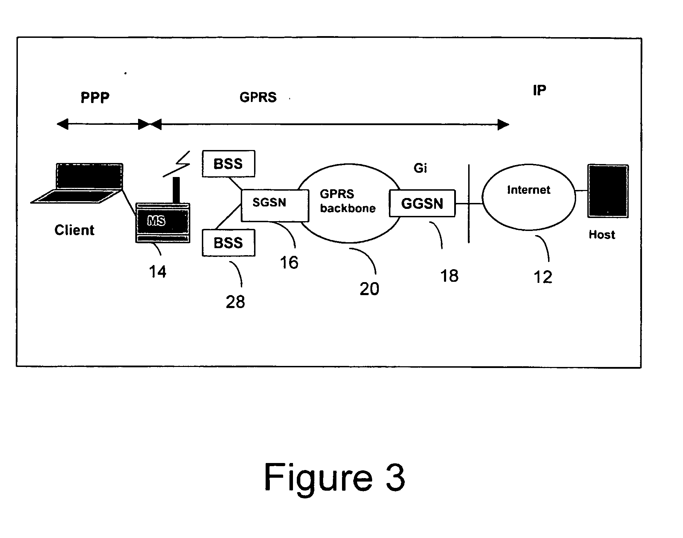

According to one preferred embodiment of the present invention, the mobile communication system 10 is a GPRS-network 10 (General Packet Radio Service, a standardized packet switching data service for GSM) and the public data communication network 12 is Internet 12. In this case, Internet 12 and the GPRS-network 10 are connected to an interface, Gi (compare Figure 3) where a mobile Internetuser is allocated an IP-address.

According to another preferred embodiment of the Present invention, the mobile communication system 10 is a GPRS-network 10 and the public data communication network 12 is an Intranet 12. In this case Intranet 12 and the GPRS-network 10 are connected to an interface, Gi, where a mobile Intranet-user is allocated a private IP-address, and a router (not shown) which converts private addresses to public addresses and vice versa. This router is designated, for instance, NAT (Network Address Translation).

Each modified call detail data record is preferably a modified CDR (Gall Detail Record) which includes time information, IMSI (International Mobile Subscriber Identity), MSISDN and allocated address.

Said second memory device 26 can, for instance, be an HLR (Home Location Register), that is, a database where relevant customer information is stored.

According to one preferred embodiment of the present invention, said first node 16 is an SGSN-node 16 (Serving GPRS Support Node) and said second node 18 is a GGSN-node 18 (Gateway GPRS Support Node).

At initiation •by a mobile station 14, each CDR is created in the SGSN-node 16 and/or the GGSN-node 18.

According to one preferred embodiment of the present invention, said third node 22 is a BH-node (Billing Handler), that is, a node which rearis, stores, filters and formats CDRs.

In Figure 3 is illustrated in schematic form mobile Internet access via a GPRS-network. In Figure 3 corresponding parts have been equipped with reference designations of the same kind as in Figure 2. In the in Figure 3 shown case, the mobile communication system 10 is a GPRS-network, and the public data communication network 12 is Internet 12. In Figure 3, the mobile station 14 (MS) is connected to a client, here shown in form of a portable computer. In addition, a host computer connected to Internet 12 is shown.

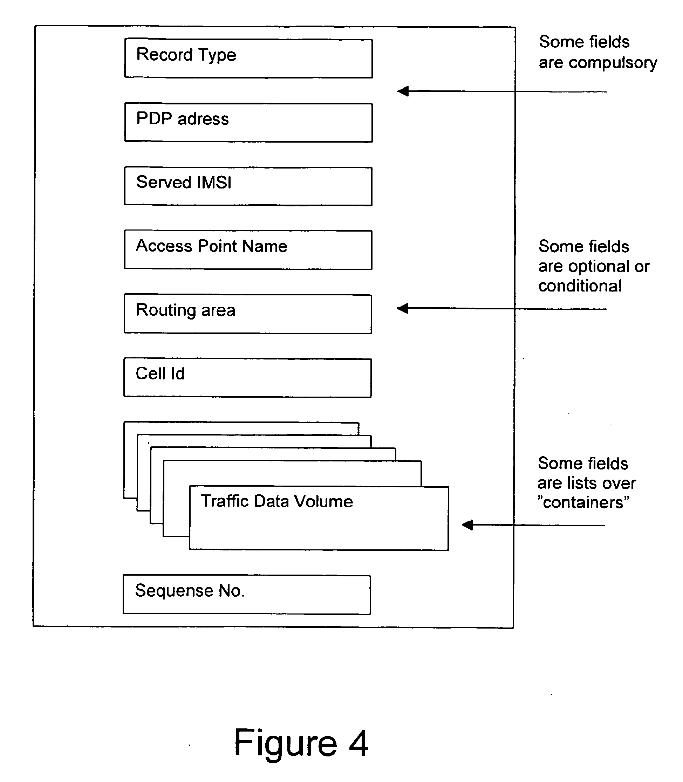

In Figure 4 an example of data field in a CDR is schematically shown. As can bee seen in Figure 4, some fields are compulsory. Some fields are optional or are conditional. Some fields are lists over "containers".

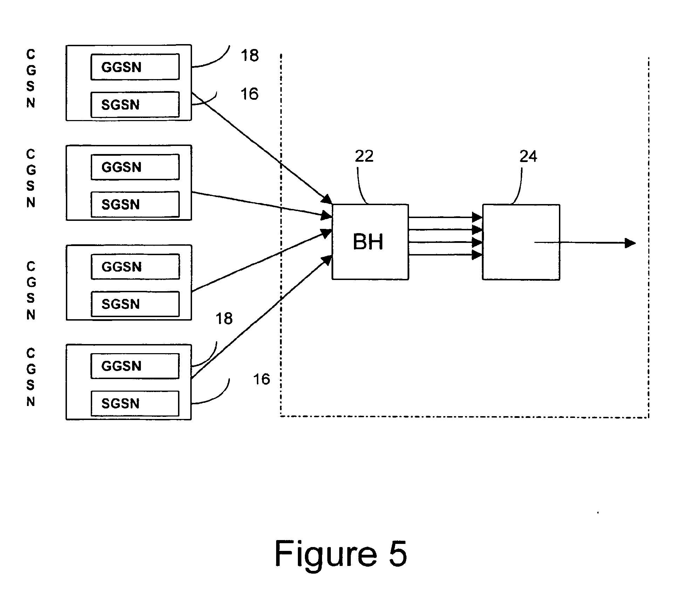

In Figure 5 is schematically illustrated a Billing Handler in a GPRS-network. In Figure 5 corresponding parts have been equipped with reference designations of the same kind as in Figure 2. In Figure 5 can be seen that a number of GGSN-nodes 18 and SGSN-nodes 16 are connected to the BHnode 22, which in its turn is connected to the first memory device 24, for instance an IP-logging database 24.

Below follows a different description of how the in Figure 2-5 shown system and the present invention is functioning.

To a GPRS-network 10 applies that the interface towards Internet 12 is created via the so called Gi-interface. There the mobile Internet-user 14 is allocated an IP-address. In order to simplify the description, the address shown is a public IP-address which can be seen on Internet.

The invention utilizes charging qualities of the GPRS-network and especially its CDRs, which are defined in the standard with the intention to debit the customer. By correct configuration of the GPRS-nodes, the CDRs can be utilized to connect the IP-addresses of/on the Gi-interface with a subscriber of the mobile operator.

The GPRS-network stores information about time of the day, IMSI, MSISDN and allocated IP-address when the GPRS-procedure PDP Context Activation is activated. By a change in the GPRS-network (compare with the standard) a modified CDR is created with the information above, which is transmitted to Billing Handler. The general task of the Billing Handler is to filter and duplicate incoming CDRs, and to distribute the CDR to suitable after-treatment system, in this case an IP-logging database for misuse on Internet. From the information in the stored database it then will be possible to, together with customer information in HLR (connection IMSI-customer), find out the identity of the misuser.

With the technology of today, one is forced to let each user of Internet perform a log-in procedure where the user specifies user name and password by means of a node with Radius-similar functionality. The Radius-server then registers password, user name and time of the day in a network database together with one from a DHCP-server allocated global IP-address. At the log out, when the IPaddress is returned to the IP-pool, the new time of the day is again registered together with the user's data.

The difference here is that charging system/systems with CDRs are used to connect IP-address and user in an automatic way without any logging-in. The CDRs automatically log just that procedure in which one is interested, that is, when allocation of IP-address (PDP Context Activation) is made and when IP-address is returned (PDP Context Deactivation).

Advantages are:
- Any radius-server is not needed (one node fewer)
- No extra logging-on with user name and password is needed, but it will none the less be possible to handle identification of users.

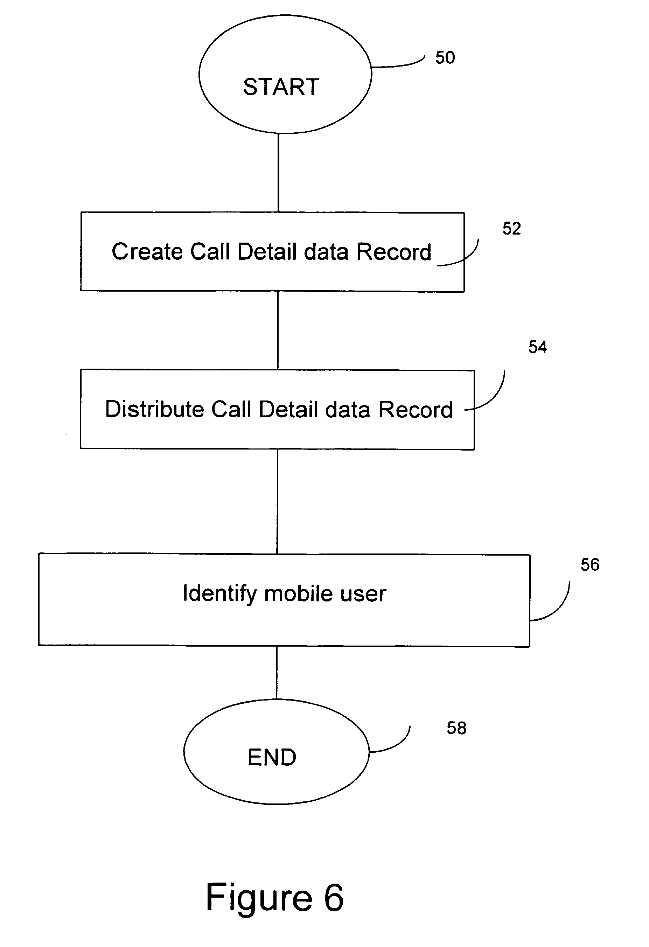

In Figure 6 there is disclosed a flow chart of a method for identifying, in a mobile communication system, mobile users when establishing a connection towards a public data communication network according to the present invention. The mobile communication system includes at least one first node for handling of packet switching and charging data, and at least one second node for establishing of connection to public data communication networks and transmission/ mediatron of addresses (compare Figure 2). The method starts at the block 50. The method then proceeds, at the block 52, with the step: to, at initiation by a mobile station in the first node, and/or in the second node, create a modified call detail data record, which includes a connection between an address and a subscriber. After that, the method proceeds, at the block 54, with the step: that a third node connected to raid first node/nodes and to said second node/nodes for filtering and duplication of modified call detail data records, distributes the modified call detail data record to one to the third node connected first memory device. The method then proceeds, at the block 56, with the step: to identify a mobile user by means of the first memory device and one to said first node/nodes connected second memory device which stores subscriber information. The method then is terminated at the block 58. This method can, for instance, be executed by the in Figure 2 shown system.

According to one preferred embodiment of the method according to the present invention, the mobile communication system is a GPRS-network, and the public data communication network is Internet. Internet and the GPRS-network are connected to an interface, Gi, which procedure in addition includes the step: that the interface allocates an IP-address to a mobile Internet-user.

According to another preferred embodiment of the method according to the present invention, the mobile communication system is a GPRS-network and the public data communication network is an Intranet. Intranet and the GPRS-network are connected to an interface, Gi, and a router, which method in addition includes the steps:
- that the interface allocates a private IP-address to a mobile Internet-user; and
- that the router converts the private address to a public address. The router also can convert the address in the opposite direction.

Each modified call detail data record preferably is a modified CDR which includes time information, IMSI, MSISDN and allocated address.

According to one preferred embodiment, the second memory device is an HLR.

According to one preferred embodiment, said first node is an SGSN-node and said second node is a GGSN-node.

The method also can include the step:
- that, at initiation by a mobile station, each CDR is created in an SGSN-node and/or in a GGSN-node.

According to one preferred embodiment, said third node is a BH-node.

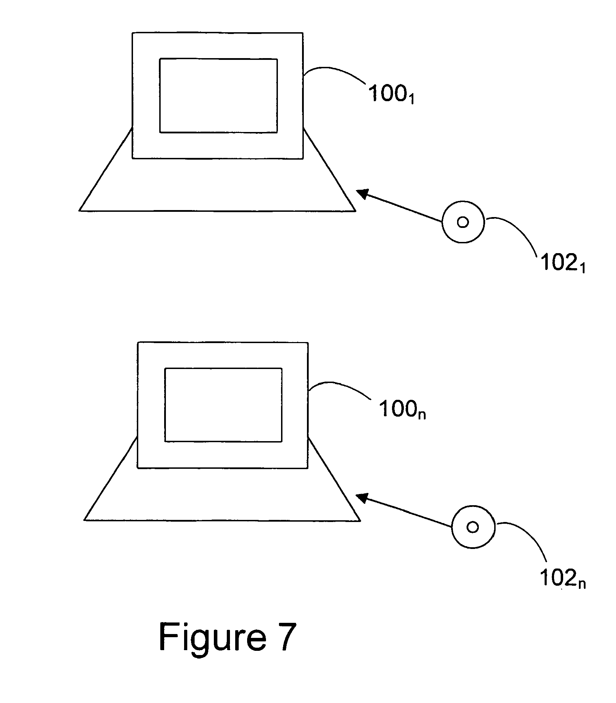

In Figure 7, a schematic illustration of some computer program products according to the present invention are shown. In Figure 7, n different digital computers 100₁,_,100ₙ, are shown. Each computer program product 102₁,_,102ₙ includes software code parts to execute all steps according to Figure 6 when the product/products 102₁,...,102ₙ are run one the computer/computers 100₁,_,100ₙ. The computer program products 102₁,...,102ₙ can, for instance, be in form of diskettes, RAM-disks, magnetic tapes, optic magnetic disks, or some other suitable products.

The invention is not limited to the above described embodiments. It will be obvious that a lot of different modifications are possible within the scope of the enclosed claims.

## Claims

1. A mobile communication system (10) for identifying, when establishing a connection towards a public data communication network (12), mobile users (14), wherein the mobile communication system (10) includes at least one first node (16) for handling of packet switching and charging data, and at least one second node (18) for establishing a connection to public data communication networks (12) and transmission/mediation of addresses, **characterized in that** the mobile communication system (10) also comprises a third node (22) connected to said first node/nodes (16) and to said second node/nodes (18) for filtering and duplication of modified call detail data records, wherein each modified call detail data record is a Call Detail Record (CDR) which includes time information, IMSI, International Mobile Subscriber Identity, MSISDN, Mobile Station Integrated Services Digital Network Number, and allocated address, wherein the third node (22) is adapted to distribute the modified call detail data records to one to the third node (22) connected first memory device (24), wherein a mobile user (14) is identified by means of the information stored in the first memory device (24) together with subscriber information stored in a second memory device (26) connected to said first node/nodes (16).

2. A mobile communication system (10) for identifying, when establishing a connection towards a public data communication network (12), mobile users (14)according to claim 1, further **characterized in that** the mobile communication system is a GPRS-network (10) and the public data communication network (12) is Internet, and **in that** the GPRS-network (10) and Internet (12) are connected to an interface where a mobile Internet-user is allocated an IP-address.

3. A mobile communication system (10) for identifying, when establishing a connection towards a public data communication network (12), mobile users (14) according to claim 1, funther **characterized in that** the mobile communication system (10) is a GPRS-network (10) and the public data communication network (12) is an Intranet, and **in that** the GPRS-network (10) and Intranet (12) are connected to an interface where a mobile Intranet-user (14) is allocated a private IP-address, and a router adepted to convert private addresses to public addresses and vice versa.

4. A mobile communication system (10) for identifying, when establishing a connection towards a public data communication network (12), mobile users (14) according to any one of claims 1-3, further
**characterized in that** the second memory device (26) is an HLR.

5. A mobile communication system (10) for identifying, when establishing a connection towards a public data communication network (12), mobile users (14) according to any one of claims 1-4, further
**characterized in that** said first node (16) is an SGSN (16) and **in that** said second node (18) is a GGSN (18) .

6. A mobile communication system (10) for identifying, when establishing a connection towards a public data communication network (12), mobile users (14) according to claim 5, further **characterized in that** each CDR is created in SGSN (16) and/or GGSN (18) at initiation by a mobile station (14).

7. A mobile communication system (10) for identifying, when establishing a connection towards a public data communication network (12), mobile users (14) according to any one of claims 1-6, further **characterized in that** said third node (22) is a BH-node (22).

8. A method for identifying, in a mobile communication system (10),mobile users (14) when establishing a connection towardsa public data communication network (12), wherein the mobile communication system includes at least one first node (16) forhandling of packet switching and charging data, and at least one second node (18) for establishing a connection topublic data communication networks (12) and transmission/mediation of addresses, **characterized in that** the method comprises the steps:
- to, at initiation by a mobile station (14) in the first node (16) and/or in the second node (18) create a modified call detail data record, which is a Call Detail Record (CDR) which includes time information, IMSI, International Mobile Subscriber Identity, MSISDN, Mobile Station Integrated Services Digital Network Number, and allocated address;
- that a third node (22) connected to said first node/nodes (16) and to said second node/nodes (18) for filtering and duplication of modified call detail data records, distributes the modified call detail data record to one to the third node (22) connected first memory device (24) ; and
- to identify a mobile user (14) by means of the information stored in the first memory device (24) together with subscriber information stored in a second memory device (26) connected to said first node/nodes (16).

9. A method for identifying, in a mobile communication system (10), mobile users (14) when establishing a connection towards a public data communication network (12) according to claim 8, further **characterized in that** the mobile communication system (10) is a GPRS-network (10) and the public data communication network (12) is Internet (12), and **in that** the GPRS-network (10) and Internet (12) are connected to an interface, which method in addition includes the step:
- that the interface allocates a mobile Internet-user an IP-address.

10. A method for identifying, in a mobile communication system (10), mobile users (14) when establishing a connection towards a public data communication network (12) according to claim 8, further **characterized in that** the mobile communication system (10) is a GPRS-network (10) and the public data communication network (12) is an Intranet (12), and **in that** the GPRS-network (10) and Intranet (12) are connected to an interface and a router, which method in addition includes the steps:
- that the interface allocates a mobile Intranet-user (14) a private IP-address; and
- that the router converts the private address to a public address, which router in addition converts public addresses to private addresses.

11. A method for identifying, in a mobile communication system (10), mobile users (14) when establishing a connection towards a public data communication network (12) according to any one of claims 8-10, further **characterized in that** the second memory device (26) is an HLR.

12. A method for identifying, in a mobile communication system (10), mobile users (14) when establishing a connection towards a public data communication network (12) according to any one of claims 8-11, further **characterized in that** said first node (16) is an SGSN (16) and **in that** said second node (18) is a GGSN (18).

13. A method to identifying, in a mobile communication system (10), mobile users (14) when establishing a connection towards a public data communication network (12) according to claim 12, further **characterized in that** the method in addition includes the step:
- that, at initiation by a mobile station (14), each CDR is created in an SGSN (16) and/or in a GGSN (18).

14. A method to identifying, in a mobile communication system (10), mobile users (14) when establishing a connection towards a public data communication network (12) according to any one of claims 8-13, further **characterized in that** said third node (22) is a BH-node(22).

15. A computer program product (102₁, ..., 102ₙ) stored on a computer usable medium, comprising computer program code means adapted to perform the steps of a method according to claim 8, when running on at least one digital computer (100₁, ..., 100ₙ) .

## Patentansprüche

1. Mobiles Kommunikationssystem (10) zum Identifizieren von mobilen Benutzern (14), wenn eine Verbindung zu einem öffentlichen Datenkommunikationsnetz (12) eingerichtet wird, wobei das mobile Kommunikationssystem (10) wenigstens einen ersten Knoten (16) zum Handhaben von Paketvermittlung und Berechnungsdaten und wenigstens einen zweiten Knoten (18) zum Einrichten einer Verbindung zu öffentlichen Datenkommunikationsnetzen (12) und für Übertragung/Vermittlung von Adressen einschließt, **dadurch gekennzeichnet, dass** das mobile Kommunikationssystem (10) auch einen dritten Knoten (22) aufweist, der mit dem/den ersten Knoten (16) und mit dem/den zweiten Knoten (18) zum Filtern und Duplizieren von modifizierten Rufdetaildatenaufzeichnungen verbunden ist, wobei jede modifizierte Rufdetaildatenaufzeichnung eine Rufdetailaufzeichnung (Call Detail Record, CDR) ist, die Zeitinformation, IMSI, internationale mobile Teilnehmeridentität, MSISDN, digitale Netznummer von integrierten Dienten von mobilen Stationen, und zugeordnete Adresse einschließt, wobei der dritte Knoten (22) dazu ausgebildet ist, die modifizierten Rufdetaildatenaufzeichnungen einer mit dem dritten Knoten (22) verbundenen ersten Speichereinrichtung (24) zuzuteilen, wobei ein mobiler Benutzer (14) mithilfe der Information identifiziert wird, die in der ersten Speichereinrichtung (24) gespeichert ist, zusammen mit Teilnehmerinformation, die in einer zweiten Speichereinrichtung (26) gespeichert ist, die mit dem/den ersten Knoten (16) verbunden ist.

2. Mobiles Kommunikationssystem (10) zum Identifizieren von mobilen Benutzern (14), wenn eine Verbindung zu einem öffentlichen Datenkommunikationsnetz (12) eingerichtet wird, gemäß Anspruch 1, weiter **dadurch gekennzeichnet, dass** das mobile Kommunikationssystem ein GPRS-Netz (10) und das öffentliche Datenkommunikationsnetz (12) Internet ist, und dass das GPRS-Netz (10) und das Internet (12) mit einer Schnittstelle verbunden sind, wo einem mobilen Internetnutzer eine IP-Adresse zugeordnet ist.

3. Mobiles Kommunikationssystem (10) zum Identifizieren von mobilen Benutzern (14), wenn eine Verbindung zu einem öffentlichen Datenkommunikationsnetz (12) eingerichtet wird, gemäß Anspruch 1, weiter **dadurch gekennzeichnet, dass** das mobile Kommunikationssystem (10) ein GPRS-Netz (10) und das öffentliche Datenkommunikationsnetz (12) ein Intranet ist, und dass das GPRS-Nets (10) und das Intranet (12) mit einer Schnittstelle, wo einem mobilen Intranetbenutzer (14) eine private IP-Adresse zugeordnet ist, und einem Router verbunden sind, der dazu ausgebildet ist, private Adressen in öffentliche Adressen und umgekehrt umzuwandeln.

4. Mobiles Kommunikationssystem (10) zum Identifizieren von mobilen Benutzern (14), wenn eine Verbindung zu einem öffentlichen Datenkommunikationsnetz (12) eingerichtet wird, gemäß einem der Ansprüche 1 bis 3, weiter **dadurch gekennzeichnet, dass** die zweite Speichereinrichtung (26) ein HLR (holme location register, Ausgangsregister) ist.

5. Mobiles Kommunikationsnetz (10) zum Identifizieren von mobilen Benutzern (14), wenn eine Verbindung zu einem öffentlichen Datenkommunikationsnetz (12) eingerichtet wird, gemäß einem der Ansprüche 1 bis 4, weiter **dadurch gekennzeichnet, dass** der erste Knoten (16) ein SGSN (Dienst-GPRS-Unterstützungsknoten, 16) und dass der zweite Knoten (18) ein GGSN (Gateway-GPRS-Unterstützungsknoten, 18) ist.

6. Mobiles Kommunikationssystem (10) zum Identifizieren, von mobilen Benutzern (14), wenn eine Verbindung zu einem öffentlichen Datenkommunikationsnetz (12) eingerichtet wird, gemäß Anspruch 5, weiter **dadurch gekennzeichnet**, das jede CDR in SGSN (16) und/oder GGSN (18) bei Kontaktaufnahme durch eine mobile Station (14) erzeugt wird.

7. Mobiles Kommunikationssystem (10) zum Identifizieren von mobilen Benutzern (14), wenn eine Verbindung zu einem öffentlichen Datenkommunikationsnetz (12) eingerichtet wird, gemäß einem der Ansprüche 1 bis 6, weiter **dadurch gekennzeichnet, dass** der dritte Knoten (22) ein BH-Knoten (22) ist.

8. Verfahren zum Identifizieren von mobilen Benutzern (14) in einem mobilen Kommunikationssystem (10), wenn eine Verbindung zu einem öffentlichen Datenkommunikationsnetz (12) eingerichtet wird, wobei das mobile Kommunikationssystem wenigstens einen ersten Knoten (16) zum Handhaben von Paketvermittlung und Rechnungsstellungsdaten und wenigstens einen zweiten Knoten (18) zum Einrichten einer Verbindung zu öffentlichen Datenkommunikationsnetzen (12) und für Übertragung/Vermittlung von Adressen einschließt, **dadurch gekennzeichnet, dass** das Verfahren die Schritte aufweist:
- bei Kontaktaufnahme durch eine mobile Station (14) in dem ersten Knoten (16) und/oder dem zweiten Knoten (18) eine modifizierte Rufdetaildatenaufzeichnung zu erzeugen, die eine Rufdetailaufzeichnung (CDR) ist, die Zeitinformation, IMSI, internationale mobile Teilnehmeridentität, MSISDN, digitale Netznummer für integrierte Dienste von Mobilstationen und zugeordnete Adresse einschließt;
- dass ein dritter Knoten (22) mit dem/den ersten Knoten (16) und dem/den zweiten Knoten (18) verbunden ist, um modifizierte Rufdetaildatenaufzeichnungen zu filtern und zu duplizieren, die modifizierte Rufdetaildatenaufzeichnung einer mit dem dritten Knoten (22) verbundenen ersten Speichereinrichtung (24) zuteilt; und
- einen mobilen Benutzer (14) mithilfe der Information, die in der ersten Speichereinrichtung (24) gespeichert ist, zusammen mit Teilnehmerinformation, die in einer zweiten Speichereinrichtung (26) gespeichert ist, die mit dem/den ersten Knoten (16) verbunden ist, zu identifizieren.

9. Verfahren zum Identifizieren von mobilen Benutzern (14) in einem mobilen Kommunikationssystem (10), wenn eine Verbindung zu einem öffentlichen Datenkommunikationsnetz (12) hergestellt wird, gemäß Anspruch 8, weiter **dadurch gekennzeichnet, dass** das mobile Kommunikationssystem (10) ein GPRS-Netz (10) ist und das öffentliche Datenkommunikationsnets: (12) Internet (12) ist, und das das GPRS-Nets (10) und Internet (12) mit einer Schnittstelle verbunden sind, welches Verfahren zusätzlich den Schritt einschließt:
- dass die Schnittstelle einem mobilen Internetbenutzer eine IP-Adresse zuordnet.

10. Verfahren zum Identifizieren von mobilen Benutzern (14) in einem mobilen Kommunikationssystem (10), wenn eine Verbindung zu einem öffentlichen Datenkommunikationsnetz (12) eingerichtet wird, nach Anspruch 8, weiter **dadurch gekennzeichnet, dass** das mobile Kommunikationssystem (10) ein GPRS-Netz (10) und das öffentliche Datenkommunikationsnetz (12) ein Intranet (12) ist, und dass das GPRS-Netz (10) das Intranet (12) mit einer Schnittstelle und einem Router verbunden sind, welches Verfahren zusätzlich die Schritte einschließt:
- dass die Schnittstelle einem mobilen Intranetbenutzer (14) eine private IP-Adresse zuordnet; und
- dass der Router die private Adresse in eine öffentliche Adresse umwandelt, welcher Router zusätzlich öffentliche Adressen in private Adressen umwandelt.

11. Verfahren zum Identifizieren von mobilen Benutzern (14) in einem mobilen Kommunikationssystem (10), wenn eine Verbindung zu einem öffentlichen Datenkommunikationsnetz (12) eingerichtet wird, gemäß einem der Ansprüche 8 bis 10, weiter **dadurch gekennzeichnet, dass** die zweite Speichereinrichtung (26) ein HLR (home location register, Ausgangsregister) ist.

12. Verfahren zum Identifizieren von mobilen Benutzern (14) in einem mobilen Kommunikationssystem (10), wenn eine Verbindung zu einem öffentlichen Datenkommunikationsnetz (12) eingerichtet wird, gemäß einem der Ansprüche 8 bis 11, weiter **dadurch gekennzeichnet, dass** der erste Knoten (16) ein SGSN (Dienst-GPRS-Unterstützungsknoten, 16) und der zweite Knoten (18) ein GGSN (Gateway-GPRS-Unterstützungsknoten, 18) ist.

13. Verfahren zum Identifizieren von mobilen Benutzern (14) in einem mobilen Kommunikationssystem (10), wenn eine Verbindung zu einem öffentlichen Datenkommunikationsnetz (12) eingerichtet wird, gemäß Anspruch 12, weiter **dadurch gekennzeichnet, dass** das Verfahren zusätzlich den Schritt einschließt;
dass bei Kontaktherstellung durch eine mobile Station (14) jede CDR (Rufdetailaufzeichnung) in einem SGSN (16) und/oder in einem GGSN (18) erzeugt wird.

14. Verfahren zum Identifizieren von mobilen Benutzern (14) in einem mobilen Kommunikationssystem, wenn eine Verbindung zu einem öffentlichen Datenkommunikationsnets (12) eingerichtet wird, gemäß einem der Ansprüche 8 bis 13, weiter **dadurch gekennzeichnet, dass** der dritte Knoten (22) ein BH-Knoten (22) ist.

15. Computerprogrammerzeugnis (102₁ ,..., 102ₙ), das in einem computernutzbaren Medium gespeichert ist, das Computerprogrammcodemittel aufweist, die dazu ausgebildet sind, die Schritte eines Verfahrens gemäß Anspruch 8 durchzuführen wenn es wenigstens auf einem digitalen Computer (100₁ ,..., (100ₙ) abläuft.

## Revendications

1. Système de communication mobile (10) destiné à identifier, lors de l'établissement d'une connexion vers un réseau de communication de données public (12), des utilisateurs mobiles (14), dans lequel le système de communication mobile (10) comporte au moins un premier noeud (16) destiné à prendre en charge la commutation de paquets et la facturation de données, et au moins un deuxième noeud (18) destiné à établir une connexion vers des réseaux de communication de données publics (12) et la transmission/médiation d'adresses, **caractérisé en ce que** le système de communication mobile (10) comprend aussi un troisième noeud (22) relié audit premier noeud (ou noeuds) (16) et audit deuxième noeud (ou noeuds) (18) afin de filtrer et d'assurer la duplication des enregistrements numériques de détail d'appel modifiés, dans lequel chaque enregistrement numérique de détail d'appel modifié est un enregistrement de détail d'appel (CDR) qui comporte des informations temporelles, une identité d'abonné mobile international, IMSI, un numéro de réseau numérique de services intégrés de station mobile, MSISDN, et une adresse attribuée, dans lequel le troisième noeud (22) est adapté afin de distribuer les enregistrements numériques de détail d'appel modifiés à un au premier dispositif de mémoire (24) relié au troisième noeud (22), dans lequel un utilisateur mobile (14) est identifié au moyen des informations mémorisées dans le premier dispositif de mémoire (24) ensembles avec les informations d'abonné mémorisées dans un second dispositif de mémoire (26) relié audit premier noeud (ou noeuds) (16).

2. Système de communication mobile (10) destiné à identifier, lors de l'etablissement d'une connexion vers un réseau de communication de données public (12), des utilisateurs mobiles (14) selon la revendication 1, **caractérisé, en outre, en ce que** le système de communication mobile est un réseau GPRS (10) et le réseau de communication de données public (12) est le réseau Internet, et **en ce que** le réseau GPRS (10) et le réseau Internet (12) sont couplés à une interface dans lequel un utilisateur d'Internet mobile est affecté d'une adresse IP.

3. Système de communication mobile (10) destiné à identifier, lors de l'établissement d'une connexion vers un réseau de communication de données public (12), des utilisateurs mobiles (14) selon la revendication 1, **caractérisé, en outre, en ce que** le système de communication mobile (10) est un réseau GPRS (10) et le réseau de communication de données public (12) est un réseau "Intranet", et **en ce que** le réseau GPRS (10) et le réseau "Intranet" (12) sont couplés à une interface dans lequel un utilisateur "Intranet," mobile (14) est affecté à une adresse IP privée, et un élément d'acheminement adapté afin de transformer des adresses privées en adresses publiques et réciproquement.

4. Système de communication mobile (10) destiné à identifier, lors de l'établissement d'une connexion vers un réseau de communication de données public (12), des utilisateurs mobiles (14) selon l'une quelconque des revendications 1 à 3, **caractérisé, en outre, en ce que** le second dispositif bloc de mémoire (26) est un registre HLR.

5. Système de communication mobile (10) destiné à identifier, lors de rétablissement d'une connexion vers un réseau de communication de données public (12), des utilisateurs mobiles (14) selon l'une quelconque des revendications 1 à 4, **caractérisé, en outre, en ce que** ledit premier noeud (16) est un noeud SGSN (16) et **en ce que** ledit deuxième noeud (18) est un noeud GGSN (18).

6. Système de communication mobile (10) destiné à identifier, lors de l'établissement d'une connexion vers un réseau de communication de données public (12), des utilisateurs mobiles (14) selon la revendication 5, **caractérisé, en outre, en ce que** chaque enregistrement CDR est créé sur un noeud SGSN (16) et/ou un noeud GGSN. (18) lors de la mise en d'une station mobile (14).

7. Système de commuication mobile (10) destiné à identifier, lors de l'établissement d'une connexion vers un réseau de communication de données public (12), des utilisateurs mobiles (14) selon l'une quelconque des revendications 1 à 6, **caractérisé, en outre, en ce que** ledit troisième noeud (22) est un noeud de facturation BH (22).

8. Procédé d'identification dans un système de communication mobile (10) d'utilisateurs mobiles (14) lors de l'établissement d'une connexion vers un réseau de communication de données public (12), dans lequel le système de communication mobile comporte au moins un premier noeud (16) destiné à prendre en charge la commutation de paquets et la facturation de données, et au moins un deuxième noeud (18) destiné à établir une connexion vers des réseaux de communication de données publics (12) et la transmission/médiation d'adresses, **caractérisé en ce que** le procédé comprend les étapes ;
de création, lors de la mise en d'une station mobile (14) sur le premier noeud (16) et/ou sur le deuxième noeud (18), d'un enregistrement numérique de détail d'appel modifié, qui est un enregistrement de détail d'appel (CDR) qui comporte des informations temporelles, une identité d'abonné mobile internationale IMSI, un numéro de réseau numérique de services intégrés de station mobile MSISDN, et une adresse affectée ;
**en ce qu'**un troisième noeud (22) relié audit premier noeud (ou noeuds) (16) et audit deuxième noeud (ou noeuds) (18) afin de filtrer et d'assurer la duplication des enregistrements numériques de détail d'appel modifiés, distribue l'enregistrement numérique de détail d'appel modifié à un au premier dispositif de mémoire (24) relié au troisième noeuds (22) ; et par
l'identification d'un utilisateur de mobile (14) au moyen des informations mémorisées dans le premier dispositif de mémoire (24) ensemble avec des informations d'abonné mémorisées dans un second dispositif de mémoire (26) relié audit premier noeud (ou noeuds) (16).

9. Procédé d'identification dans un système de communication mobile (10) d'utilisateurs mobiles (14) lors de l'établissement d'une connexion vers un réseau de communication de données public (12) selon la revendication 8, **caractérisé, en outre en ce que** le système de communication mobile (10) est un réseau GPRS (10) et le réseau de communication de données public (12) est le réseau Internet (12), et **en ce que** le réseau GPRS (10) et le réseau Internet (12) sont couplés à une interface, lequel procédé comporte, en outre, rétame :
**en ce que** l'interface affecte à l'utilisateur d'Internet mobile une adresse IP.

10. Procédé d'identification dans un système de communication mobile (10) d'utilisateurs mobiles (14) lors de l'établissement d'une connexion vers un réseau de communication de données public (12) selon la revendication 8, **caractérisé, en outre, en ce que** le système de communication mobile (10) est un réseau GPRS (10) et le réseau de communication de données public (12) est un réseau "Intranet," (12), et **en ce que** le réseau GPRS (10) et le réseau "Intranet" (12) sont couplés à une interface et à un élément d'acheminement qui, lequel procédé comporte, en outre, les étapes :
**en ce que** l'interface affecte à un utilisateur "Intranet" mobile (14) une adresse IP privée ; et
**en ce que** l'élément d'acheminement transforme l'adresse privée en une adresse publique, lequel élément d'acheminement transforme, en outre, des adresses publiques en adresses privées.

11. Procédé d'identification dans un système de communication mobile (10) d'utilisateurs mobiles (14) lors de l'établissement d'une connexion vers un réseau de communication de données public (12) selon l'une quelconque des revendications 8 à 10, **caractérisé, en outre, en ce que** le second dispositif de mémoire (26) est un registre HLR.

12. Procédé d'identification dans un système de communication mobile (10) d'utilisateurs mobiles (14) lors de l'établissement d'une connexion vers un réseau de communication de données public (12) selon l'une quelconque des revendications 8 à 11, **caractérisé, en outre, en ce que** ledit premier noeud (16) est un noeud SGSN (16) et **en ce que** ledit deuxième noeud (18) est un noeud GGSN. (18).

13. Procédé d'identification dans un système de communication mobile (10) d'utilisateurs mobiles (14) lors de l'établissement d'une connexion vers un réseau de communication de données public (12) selon la revendication 12, **caractérisé, en outre, en ce que** le procédé comporte, en outre; l'étape :
**en ce que**, lors de la mise en d'une station mobile (14), chaque enregistrement CDR est créé sur un noeud SGSN (16) et/ou sur un noeud GGSN (18).

14. Procédé d'identification dans un système de communication mobile (10) d'utilisateurs mobiles (14) lors de l'établissement d'une connexion vers un réseau de communication de données public (12) selon l'une quelconque des revendications 8 à 13, **caractérisé, en outre, en ce que** ledit troisième noeud (22) est un noeud de facturation BH (22),

15. Produit formant programme informatique (102₁, ..., 102ₙ) mémorisé sur un support pouvant être utilise par un ordinateur, comprenant un moyen formant code de programme informatique adapté de manière à exécuter les étapes d'un procédé selon la revendication 8, lorsqu'il est exécuté sur au moins un ordinateur (100₁, ..., 100ₙ).
